(19) Europäisches Patentamt
European Patent Office
Office européen des brevets

(11) **EP 1 711 371 B1**

(12) **EUROPÄISCHE PATENTSCHRIFT**

(45) Veröffentlichungstag und Bekanntmachung des Hinweises auf die Patenterteilung:
**26.08.2009 Patentblatt 2009/35**

(21) Anmeldenummer: **05707170.6**

(22) Anmeldetag: **03.02.2005**

(51) Int Cl.:
*B60Q 1/08* (2006.01)   *B60Q 1/10* (2006.01)

(86) Internationale Anmeldenummer:
**PCT/EP2005/001086**

(87) Internationale Veröffentlichungsnummer:
**WO 2005/075246 (18.08.2005 Gazette 2005/33)**

(54) **VORRICHTUNG UND VERFAHREN ZUR LEUCHTWEITENREGULIERUNG EINES KRAFTFAHRZEUGS**

DEVICE AND METHOD FOR ADJUSTING THE HEADLIGHT-RANGE OF A MOTOR VEHICLE

DISPOSITIF ET PROCEDE DE REGLAGE DE LA PORTEE DES PHARES D'UNE AUTOMOBILE

(84) Benannte Vertragsstaaten:
**DE FR GB IT**

(30) Priorität: **07.02.2004 DE 102004006133**

(43) Veröffentlichungstag der Anmeldung:
**18.10.2006 Patentblatt 2006/42**

(73) Patentinhaber: **Bayerische Motoren Werke Aktiengesellschaft**
**80809 München (DE)**

(72) Erfinder:
- **KUHL, Patrick**
  **80634 München (DE)**
- **BILZ, Frank**
  **81245 München (DE)**
- **HEWERER, Jens**
  **85757 Karlsfeld (DE)**
- **NAAB, Karl**
  **85457 Wörth (DE)**

(56) Entgegenhaltungen:
**EP-A- 1 028 025        EP-A- 1 142 757**
**WO-A-03/053737        DE-A- 4 201 146**
**DE-U1- 9 416 479       US-A1- 2003 045 984**
**US-B1- 6 478 457**

- **PATENT ABSTRACTS OF JAPAN Bd. 2002, Nr. 04, 4. August 2002 (2002-08-04) -& JP 2001 341578 A (DENSO CORP), 11. Dezember 2001 (2001-12-11)**

## Beschreibung

Die Erfindung betrifft eine Vorrichtung zur Leuchtweitenregulierung der Scheinwerfer bei einem Kraftfahrzeug gemäß dem Oberbegriff des Anspruchs 1.

Zur automatischen Regulierung der Leuchtweite bei einem Kraftfahrzeug sind bereits verschiedene Vorrichtungen und Verfahren bekannt. So ist in der EP 0 869 031 B1 bereits ein Verfahren zur Regulierung der Leuchtweite von Kraftfahrzeugscheinwerfern beschrieben, bei dem mittels Videosensor Informationen der Fahrzeugumgebung gesammelt und über eine Auswerteeinheit ausgewertet werden und die Leuchtweite in Abhängigkeit hiervon reguliert wird, so dass Nickbewegungen des Fahrzeugs oder eine entsprechende Beladung automatisch in der Leuchtweite ausgeglichen werden können.

Des Weiteren ist aus der DE 197 03 664 C2 eine Einrichtung zur Einstellung der Beleuchtungsrichtung bekannt, bei der in Abhängigkeit der Neigung des Fahrzeugs in seiner Fahrtrichtung eine automatische Korrektur der Beleuchtungsrichtung vorgenommen wird.

Die EP 0 230 620 B1 beschreibt eine Scheinwerferanlage für Kraftfahrzeuge, bei der die Lichtverteilung an die Erfordernisse bei unterschiedlichen Verkehrssituationen angepasst wird. Hierfür wird mittels eines Rechners die aktuelle Verkehrssituation mit gespeicherten Verkehrssituationen verglichen und über Mittel zur Veränderung der Lichtverteilung die Lichtverteilung in der erforderlichen Weise gesteuert.

Ferner ist aus der Sonderausgabe "System Partners" der Fachzeitschrift ATZ, Jahrgang 2000, Artikel "Vision-System zur Scheinwerfersteuerung", S.36 Kapitel 5 "Steuerung von Lichtverteilungen", bereits bekannt, automatische Leuchtweitenregelungen für das Durchfahren von Senken bzw. das Überfahren von Kuppen mittels vorausschauend arbeitender Sensoren zu verbessern. Aus JP 2001-341578A ist eine gattungsmäßige vorrichtung zur Leuchtweitenregulierung bekannt.

Der Erfindung liegt die Aufgabe zugrunde, eine Vorrichtung der eingangs beschriebenen Art weiter zu verbessern und alternative Lösungen aufzuzeigen. Ihr liegt die Erkenntnis zugrunde, dass Fahrzeuge trotz der eingangs beschriebenen Vorrichtungen zur automatischen Leuchtweitenregulierung und/oder der vorhandenen Mittel zur automatischen Lichtverteilung jeweils in Abhängigkeit vom Fahrzeugbeladungszustand, in Abhängigkeit von Nickbewegungen des Fahrzeugs oder in Abhängigkeit vom bevorstehenden Kurvenverlauf einer Straße nur eine unzureichende Ausleuchtung beim Durchfahren von Fahrbahnsenken oder beim Überfahren von Fahrbahnkuppen gewährleisten. Eine Lösung mittels vorausschauender Sensorik, wie sie in vorstehend genanntem Artikel Sonderausgabe der Fachzeitschrift ATZ bereits beschrieben ist, ist nur mit einem entsprechend hohen Aufwand realisierbar.

Erfindungsgemäß wird die Aufgabe jeweils durch die Gesamtheit der Merkmale des unabhängigen Anspruchs 1 gelöst. Durch die erfindungsgemäße Sensoreinrichtung, die als nicht vorausschauende Sensorik ausgebildet ist, kann auf einfache und kostengünstige Weise mit in der Regel ohnehin bereits im Fahrzeug vorhandenen Sensoren (z.B. Sensoren zur Erfassung der Fahrzeuggeschwindigkeit, Sensoren zur Erfassung der Drehrate um die Fahrzeugquerachse, Sensoren zur Erfassung der Fahrzeugbeschleunigung in Richtung der Fahrzeugvertikalachse oder Sensoren zur Erfassung der Fahrzeughöhe in Bezug zu einer Bezugshöhe oder andere Sensoren) eine ausreichend genaue Bestimmung der aktuellen vertikalen Fahrbahnkrümmung realisiert werden.

In einer bevorzugten Ausführungsform der Erfindung weist die Sensoreinrichtung zumindest Mittel zur Erfassung der Fahrzeuggeschwindigkeit (z.B. Sensoren zur Erfassung der Raddrehzahl) sowie ein inertiales Meßsystem auf. Das inertiale Meßsystem weist hierbei ebenfalls mindestens einen weiteren Sensor - insbesondere einen Beschleunigungssensor auf. Der Beschleunigungssensor dient dabei insbesondere der Erfassung der Fahrzeugdrehrate (Drehung des Fahrzeugs um seine horizontale Querachse) und/oder der Erfassung der Beschleunigung des Fahrzeugs in vertikaler Richtung (zur Erfassung der geografischen Höhenänderung des Fahrzeugs). Alternativ für den Sensor zur Erfassung der Fahrzeug-Vertikalbeschleunigung kann auch unmittelbar ein Höhensensor zur Ermittlung der aktuellen Höhe bzw. der aktuellen Änderung der Höhe des Kraftfahrzeugs zu einem Bezugspunkt (z.B. Höhenänderung des Fahrzeugs in Bezug auf den Meeresspiegel) verwendet werden. Unter einem Sensor zur Höhenerfassung wird im Sinne der Erfindung jeder Sensor verstanden, mittels dem Daten über die tatsächliche Höhe bzw. Höhenänderung des Fahrzeugs gegenüber einem Bezugspunkt ermittelt werden können. Dabei ist es unerheblich, ob es sich um einen mechanisch aufgebauten Höhensensor (z.B. ein barometrischer Höhensensor) oder eine Einrichtung handelt, die die Höhe oder Höhenänderung über Satellit oder dergleichen ermittelt. Aus der Fahrzeuggeschwindigkeit zusammen mit der Drehrate des Fahrzeugs um seine Querachse oder der Höhenänderung des Fahrzeugs lässt sich auf einfache Weise unmittelbar die vertikale Straßenkrümmung berechnen. Eine einfache Berechnungsgrundlage zur Ermittlung der Fahrbahnkrümmung ergibt sich aus folgender Formel:

$$K = \frac{1}{R} \; ; \; \text{mit } R = \frac{180°}{\pi} \times \frac{\dot{x}}{\dot{\varphi}} \; ; \; \dot{x} = \text{Fahrzeugge-}$$

schwindigkeit in Fahrtrichtung bzw. x-Richtung [Einheit: m/sek.], $\dot{\varphi}$ = Drehrate des Fahrzeugs um die Fahrzeugquerachse y [Einheit: °/sek.].

Durch die Verwendung von Höhenstandssensoren (z.B. zur Erfassung des Fahrzeugabstands zur Fahrbahn) im Fahrwerk lassen sich Hub- und Nickbewegungen des Fahrzeugs gegenüber der Fahrbahn, wie sie beim Überfahren von Unebenheiten, beim Beschleunigen oder beim Abbremsen des Fahrzeugs regelmäßig auftreten, aus den zu ermittelnden Daten zur Berechnung der Fahrbahnkrümmung herausfiltern.

In einer Weiterbildung der Erfindung kann die Sensoreinrichtung mit nicht vorausschauend arbeitender Sensorik um eine vorausschauend arbeitende Sensorik erweitert werden. Hierdurch kann zum Einen eine entsprechende Redundanz des Systems und zum Anderen eine deutliche Steigerung der Genauigkeit erreicht werden. Dabei ist die vorausschauend arbeitende Sensorik, mittels der die Umgebung durch Erfassung von Umgebungsdaten auf das Genaueste ermittelbar ist, bevorzugt als Kamerasystem ausgebildet. Über das Kamerasystem können Objekte in Linienform, wie beispielsweise Leitlinien auf der Fahrbahn, Bordsteinkanten, Oberflächenstrukturen und/oder Helligkeits- bzw. Farbübergänge zwischen der Fahrbahnoberfläche und einer Oberfläche neben der Fahrbahn als auch Abfolgen regelmäßig erscheinender Objekte, wie z.B. Leitpfosten die im Vorfeld des Fahrzeuges auftreten, detektiert werden. Anhand des Verlaufes der erfassten Objekte (z.B. Form des Verlaufes von mindestens zwei Leitlinien in Fahrtrichtung zum Horizont) kann dann die vertikale Straßenkrümmung und/oder die Längsneigung des Fahrzeugs gegenüber der Fahrbahnoberfläche berechnet werden.

Alternativ oder zusätzlich sind weitere vorausschauend arbeitende Systeme vorgesehen, wie z.B. : - ein Navigationssystem, welches über geografische Höheninformationen der Umgebung verfügt (Navigationssystem mit 3D-Informationen) - eine Photosensoreinrichtung zur Erfassung der Leuchtdichte auf der Fahrbahn - oder ein System zur Aussendung und Verarbeitung von insbesondere optischen Strahlen und deren Reflektionen.

Ein System auf der Basis von auszusendenden Strahlen und dem Empfang von Reflexionen dieser Strahlen kann beispielsweise in verschiedenen vertikalen Winkeln in Vorwärtsfahrtrichtung Strahlen auf die Fahrbahnoberfläche senden und die Entfernung der Fahrbahnoberfläche unter diesen vertikalen Winkeln entweder durch Messung der Laufzeit der Strahlen von deren Aussendung bis zum Empfang der Reflexionen oder an Hand eines Triangulationsverfahrens bestimmen und daraus die Nickbewegungen des Fahrzeugs sowie die vertikale Krümmung der Fahrbahnoberfläche bestimmen.

Über ein Navigationssystem mit Höheninformation zu allen geografischen Ortsangaben sind in Verbindung mit der aktuellen Standortinformation und der Fahrzeuggeschwindigkeit sämtliche Fahrbahnkrümmungen berechenbar. Alternativ kann ein Navigationssystem auch unmittelbar sämtliche Fahrbahnkrümmungen gelisteter Routen hinterlegt haben und können diese dann in Verbindung mit der über Satellit oder andere externe Quellen (z.B. intelligente Leitpfosten o.d.) abrufbaren Standortinformation für die aktuelle Anpassung der Leuchtweite verwendet werden.

Eine andere Weiterbildung der Erfindung sieht eine Recheneinheit zur Plausibilitätsprüfung der Daten der Sensoreinrichtung zur Erfassung der Fahrbahnkrümmung vor. Hierdurch können die Daten von vorausschauend arbeitender und/oder nicht vorausschauend arbeitender Sensorik auf ihre Richtigkeit geprüft und bei Vorliegen eines nicht plausiblen Prüfungsergebnisses die Daten verworfen und ggf. neu ermittelt oder durch Daten für eine definierte Standardeinstellung ersetzt werden. Für die Plausibilitätsprüfung werden bevorzugt folgende Daten verwendet:

- Navigationsdaten,
- über einen vordefinierten Zeitraum erfasste und gespeicherte Werte der zu überwachenden Sensorik, mittels der z.B. eine Ermittlung der aktuell befahrenen Fahrbahn (Stadt, Landstraße, Autobahn, ...) ermöglicht wird,
- einzelne fahrdynamische Daten oder eine Kombination verschiedener fahrdynamischer Daten (z.B. Fahrzeuggeschwindigkeit, Drehrate bzw. Beschleunigung um die Fahrzeugquerachse, Fahrbahnabstände zwischen Fahrbahnoberfläche und einem Fahrzeugteil - z.B. Fahrzeugboden, Fahrzeugachse vorne/hinten, vertikale Fahrzeugbeschleunigung - nach oben bzw. nach unten, horizontale Fahrzeugbeschleunigung - in Fahrtrichtung bzw. entgegen der Fahrtrichtung, Höhe des Fahrzeugs gegenüber einer Bezugshöhe, oder
- eine beliebige Kombination der angegebenen Datenquellen.

Bevorzugt ist die Recheneinheit zur Plausibilitätsprüfung als Bestandteil der Auswerte- und Steuereinrichtung ausgebildet.

Bei Vorhandensein einer redundant ausgebildeten Sensorik kann bei einer Fehlererkennung eines Systems auch auf die noch verbleibende fehlerfreie Sensorik umgeschaltet werden.

Des Weiteren kann die Sensoreinrichtung zur Erfassung der Fahrzeug-und/oder Umgebungsdaten zumindest mit einzelnen Sensorbestandteilen verstellbar ausgebildet sein, insbesondere derart, dass eine Ausrichtung der Sensoreinrichtung bzw. einzelner Bestandteile der Sensoreinrichtung in Abhängigkeit von weiteren Fahrzeug- und/oder Umgebungsdaten möglich ist. Vorzugsweise kann die Sensoreinrichtung bzw. können Bestandteile derselben in Abhängigkeit von dem Steuerverhalten bzw. Ansteuerverhalten einer vorhandenen Kurvenlichtsteuerung verstellbar bzw. ausrichtbar sein.

Auch können Mittel zur Detektion entgegenkommender und/oder vorausfahrender Kraftfahrzeuge vorhanden sein. Dabei kann in Abhängigkeit von einer solchen Detektion eine Umschaltung der Scheinwerfer von Abblendlicht (in diesem Betriebszustand wird der Gegenstand gemäß der Erfindung vorrangig aktiv sein) auf Fernlicht erfolgen oder das Abblendlicht in eine seitlich oder vertikal veränderte Position insbesondere eine Position mit größerer oder geringerer Leuchtweite verstellt werden.

Durch den Gegenstand gemäß der Erfindung können auf vorteilhafte Weise sämtliche Arten von vertikalen Fahrbahnkrümmungen - sowohl Krümmungen auf horizontal verlaufender Fahrbahn als auch Krümmungen auf ansteigender oder auf abfallender Fahrbahn - ermittelt und eine Regulierung der Leuchtweite hieran angepasst werden.

Anhand der folgenden Figuren soll die Erfindung näher erläutert. Es zeigen:

Figur 1: ein Kraftfahrzeug beim Überfahren einer Fahrbahnkuppe,

Figur 2: eine Darstellung gemäß Figur 1, wobei eine Krümmungserfassung auf der Basis von erfasster Fahrzeuggeschwindigkeit in Verbindung mit der Fahrzeugvertikalbeschleunigung erfolgt und

Figur 3: ebenfalls eine Darstellung gemäß Figur 1, wobei eine Krümmungserfassung auf der Basis von erfasster Fahrzeuggeschwindigkeit in Verbindung mit einer erfassten Höhe bzw. Höhenänderung des Fahrzeugs erfolgt.

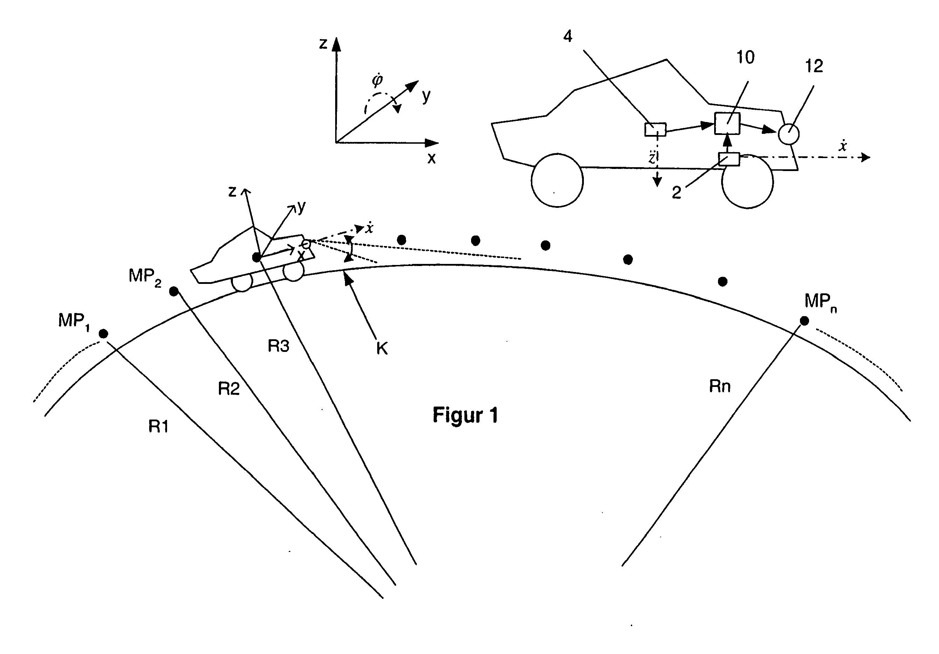

Figur 1 zeigt ein Kraftfahrzeug beim Überfahren einer Fahrbahnkuppe mit einer bestimmten Fahrbahnkrümmung K. Zur Veranschaulichung der mittels Sensorik zu erfassenden Größen ist schematisch ein Koordinatensystem eingezeichnet (x-Achse: Fahrtrichtung/ Fahrzeuglängsachse; Y-Achse: Fahrzeugquerachse; Z-Achse: Fahrzeugvertikalachse). In einer bevorzugten Ausführungsform der Erfindung werden durch die Sensorik zumindest die Fahrzeuggeschwindigkeit $\dot{x}$ in Fahrtrichtung (x-Richtung) sowie die Drehrate $\dot{\phi}$ (Drehung des Fahrzeugs um seine Querachse y) des Fahrzeugs erfasst. Die Erfassung der Fahrzeuggeschwindigkeit $\dot{x}$ kann beispielsweise über einen Fahrzeuggeschwindigkeitssensor 2 durch die Erfassung der Raddrehzahl erfolgen, während die Erfassung der Drehrate $\dot{\phi}$ über einen Drehratensensor 4 vorgenommen werden kann.

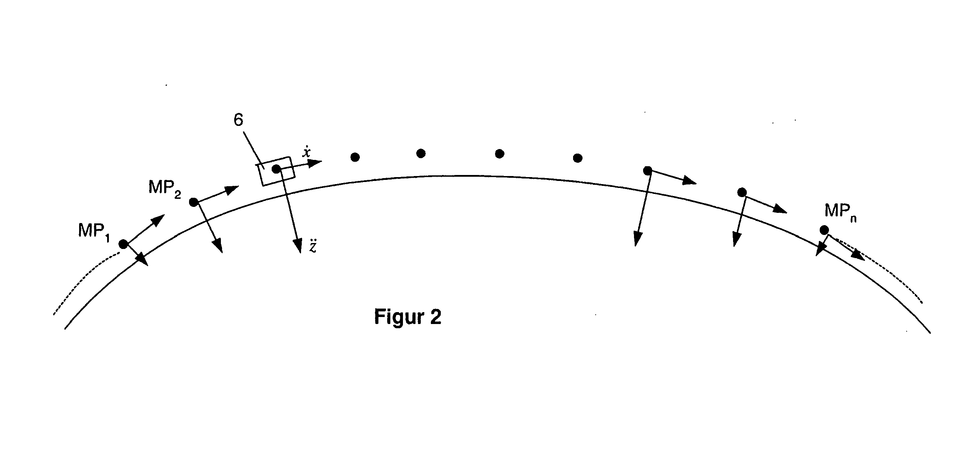

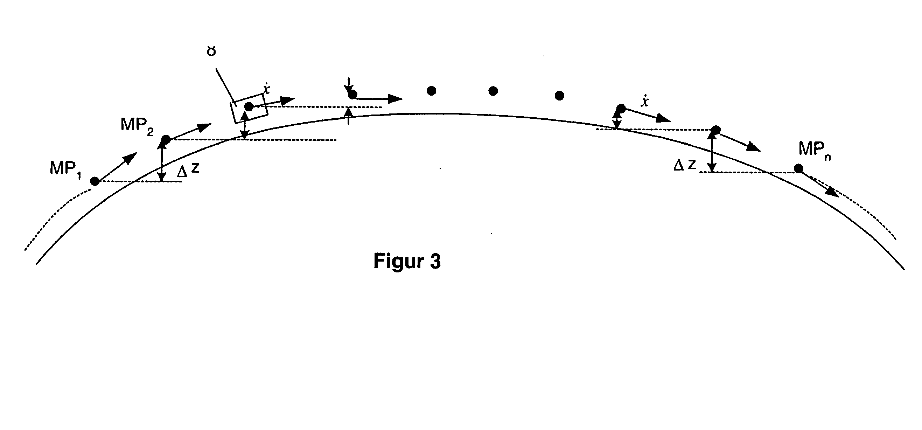

Alternativ oder zusätzlich zur Erfassung der Drehrate $\dot{\phi}$ kann auch die Höhe z bzw. die Höhenänderung $\Delta z$ (Figur 3) des Fahrzeugs erfasst und in Verbindung mit der Fahrzeuggeschwindigkeit $\dot{x}$ zur Ermittlung des Radius R bzw. der Fahrbahnkrümmung K herangezogen werden. Dabei kann die Ermittlung bzw. Erfassung der Fahrzeughöhe z beispielsweise über einen Vertikalbeschleunigungssensor 6 (Figur 2) durch Erfassung der Vertikalbeschleunigung $\ddot{z}$ indirekt oder über einen Höhenmesser 8 (Figur 3) auf direkte Weise erfolgen.

Zur Ermittlung der Fahrbahnkrümmung K werden die erfassten Sensordaten an eine Auswerte- und Steuereinrichtung 10 übermittelt. Nach Ermittlung der Fahrbahnkrümmung K wird in Abhängigkeit von dieser - über die Auswerte-und Steuereinrichtung 10 - ein Signal zur Ansteuerung der Scheinwerfereinheit 12 ermittelt und an die Scheinwerfereinheit 12 bzw. deren Stellmechanismus ausgegeben.

Wie in den Figuren 1-3 veranschaulicht, werden in zeitlich bzw. geografisch beabstandeten Messpunkten $MP_1$-$MP_n$ die Daten der zu überwachenden Sensorik abgefragt und ausgewertet. Aus der Vielzahl der ermittelten Daten kann der mittlere Radius R bzw. die mittlere Krümmung K der überfahrenen Fahrbahnkuppe bzw. des gerade überfahrenen Fahrbahnkuppenabschnittes berechnet werden. Auch kann anhand dieser Daten eine Abschätzung des folgenden Krümmungsverlaufes mit hoher Genauigkeit vorgenommen werden. Um aus den einzelnen Messpunkten $MP_1$-$MP_n$ eine Krümmung ohne Knickpunkte im Verlauf berechnen zu können finden bekannte mathematische Berechnungsverfahren über Interpolation oder z.B. durch Splines oder dergleichen Anwendung.

**Patentansprüche**

1. Vorrichtung zur automatischen Leuchtweitenregulierung bei einem Kraftfahrzeug mit zumindest einem vertikal verstellbaren Scheinwerfer, (12) umfassend

   - eine Sensoreinrichtung (2; 4; 6; 8) zur Erfassung von Fahrzeug-und/oder Umgebungsdaten und
   - eine Auswerte- und Steuereinrichtung (10) zur Auswertung der Fahrzeug- und/oder Umgebungsdaten und zur hiervon abhängige Ermittlung von Steuerdaten zur Ansteuerung des zumindest einen vertikal verstellbaren Scheinwerfers (12),
   - wobei die Sensoreinrichtung (2; 4; 6; 8) als nicht vorausschauend arbeitende Sensorik ausgebildet ist,
   **dadurch gekennzeichnet, dass**
   - die Sensoreinrichtung (2; 4; 6; 8) Mittel (2) zur Erfassung der Fahrzeuggeschwindigkeit ($\dot{x}$) sowie Mittel (4) zur Erfassung einer Drehrate ($\dot{\phi}$) des Fahrzeugs um die Fahrzeugquerachse (y) umfasst und derart ausgebildet ist, dass aus der Fahrzeuggeschwindigkeit ($\dot{x}$) und der Drehrate ($\dot{\phi}$) des Fahrzeugs um seine Querachse (y) die vertikale Fahrbahnkrümmung (K) beim Durchfahren von Fahrbahnsenken und beim Überfahren von Fahrbahnkuppen berechenbar ist.

2. Vorrichtung nach einem der vorstehenden Ansprüche, **dadurch gekennzeichnet, dass** die Sensoreinrichtung (2; 4; 6; 8) umfasst:

   - Mittel (6; 8) zur Erfassung der geografischen Höhe (z) bzw. der geografischen Höhenänderung ($\Delta z$) des Fahrzeugs.

**3.** Vorrichtung nach einem der vorstehenden Ansprüche, **gekennzeichnet durch** eine weitere, als vorausschauend arbeitende Sensorik ausgebildete Sensoreinrichtung mittels der die Erfassung einer vertikalen Fahrbähnkrümmung realisierbar ist.

**4.** Vorrichtung nach vorstehendem Anspruch 3, **dadurch gekennzeichnet, dass** die weitere Sensoreinrichtung durch ein Kamerasystem und/oder ein optische Strahlen aussendendes und verarbeitendes System und/oder eine Photosensoreinrichtung zur Erfassung der Leuchtdichte auf der Fahrbahn und/oder einem Navigationssystem mit geografischen Höheninformationen gebildet ist.

**5.** Vorrichtung nach einem der vorstehenden Ansprüche, **gekennzeichnet durch** eine Recheneinheit zur Plausibilitätsprüfung der von der zumindest einen Sensoreinrichtung (2; 4; 6; 8) gelieferten Daten.

**6.** Vorrichtung nach einem der vorstehenden Ansprüche, **gekennzeichnet durch** Mittel zur Ausrichtung der zumindest einen Sensoreinrichtung (2; 4; 6; 8), insbesondere in Abhängigkeit von dem Steuerverhalten eines vorhandenen Kurvenlichtes.

**7.** Vorrichtung nach einem der vorstehenden Ansprüche, **gekennzeichnet durch** Mittel zur Detektion entgegenkommender oder vorausfahrender Fahrzeuge.

## Claims

**1.** A device for automatically adjusting the headlight range of a motor vehicle having at least one vertically adjustable headlight (12), comprising

- a sensor device (2; 4; 6; 8) for detecting vehicle and/or environment data and
- an evaluation and control device (10) for evaluating the vehicle and/or environment data and for the determination, as a function of this, of control data for activating the at least one vertically adjustable headlight (12),
- wherein the sensor device (2; 4; 6; 8) is configured as a sensor system which does not work in predictive manner,
**characterised in that**
- the sensor device (2; 4; 6; 8) comprises means (2) for detecting the vehicle speed ($\dot{x}$) and means (4) for detecting a rate ($\dot{\varphi}$) of rotation of the vehicle about the transverse axis (y) of the vehicle, and is configured in such a way that the vertical road curvature (K) when driving through road depressions and when travelling over road cambers can be calculated from the vehicle speed ($\dot{x}$) and the rate ($\dot{\varphi}$) of rotation of the vehicle about its transverse axis (y).

**2.** A device according to the preceding claim, **characterised in that** the sensor device (2; 4; 6; 8) comprises:

- means (6; 8) for detecting the geographic height (z) or the geographic height change ($\Delta z$) of the vehicle.

**3.** A device according to any one of the preceding claims, **characterised by** a further sensor device configured as a sensor system working in a predictive manner, by means of which the vertical road curvature can be detected.

**4.** A device according to the preceding claim 3, **characterised in that** the further sensor device is formed by a camera system and/or a system emitting and processing optical beams and/or a photo sensor device for detecting the luminance on the road and/or a navigation system with geographic height information.

**5.** A device according to any one of the preceding claims, **characterised by** an arithmetic unit for checking the plausibility of the data supplied by the at least one sensor device (2; 4; 6; 8).

**6.** A device according to any one of the preceding claims, **characterised by** means for aligning the at least one sensor device (2; 4; 6; 8), especially as a function of the control behaviour of an existing cornering light.

**7.** A device according to any one of the preceding claims, **characterised by** means for detection of oncoming vehicles or vehicles driving ahead.

## Revendications

**1.** Dispositif pour réguler automatiquement la portée de projecteurs d'un véhicule automobile ayant au moins un projecteur (12) réglable verticalement comprenant:

- une installation de capteurs (2, 4, 6, 8) pour saisir les données du véhicule et/ou de l'environnement, et
- une installation d'exploitation et de commande (10) pour exploiter les données du véhicule et/ou de l'environnement et pour en déduire des données de commande servant à commander au moins le projecteur (12) réglable verticalement,
- l'installation de capteurs (2, 4, 6, 8) étant réalisée sous la forme de capteurs fonctionnant de manière non prévisionnelle,

**caractérisé en ce que**
l'installation de capteurs (2, 4, 6, 8) comporte des moyens (2) pour saisir la vitesse ($\dot{\chi}$) du véhicule ainsi que des moyens (4) pour saisir une vitesse de rotation ($\dot{\varphi}$) du véhicule autour de l'axe transversal (y) du véhicule et cette installation de capteurs est réalisée pour qu'à partir de la vitesse ($\dot{\chi}$) du véhicule et la vitesse de rotation ($\dot{\varphi}$) du véhicule autour de son axe transversal (y), on calcule la courbure verticale (K) de la chaussée au passage dans une cuvette ou sur une bosse.

2. Dispositif selon la revendication 1,
   **caractérisé en ce que**
   l'installation de capteurs (2, 4, 6, 8) comprend:

   - des moyens (6, 8) pour saisir l'altitude géographique (z) ou la variation géographique des hauteurs ($\Delta z$) du véhicule.

3. Dispositif selon l'une des revendications précédentes,
   **caractérisé en ce qu'**
   une installation de capteurs à fonctionnement prévisionnel réalise la saisie d'une courbure verticale de la chaussée.

4. Dispositif selon la revendication 3,
   **caractérisé en ce que**
   l'autre installation de capteurs est formée par un système de caméra et/ou un émetteur optique et un système de traitement et/ou une installation de photocapteurs pour saisir la densité de lumière sur la chaussée et/ou un système de navigation avec des informations d'altitude géographiques.

5. Dispositif selon les revendications précédentes,
   **caractérisé par**
   une unité de calcul qui contrôle la plausibilité des données fournies par au moins une installation de capteurs (2, 4, 6, 8).

6. Dispositif selon les revendications précédentes,
   **caractérisé par**
   des moyens pour aligner au moins une installation de capteurs (2, 4, 6, 8) notamment en fonction du comportement de commande d'une lumière en courbe ou distante.

7. Dispositif selon les revendications précédentes,
   **caractérisé par**
   des moyens pour détecter des véhicules venant en face ou qui précèdent.

Figur 1

**Figur 2**

EP 1 711 371 B1

**Figur 3**

EP 1 711 371 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0869031 B1
- DE 19703664 C2
- EP 0230620 B1
- JP 2001341578 A

**In der Beschreibung aufgeführte Nicht-Patentliteratur**

- Vision-System zur Scheinwerfersteuerung. Fachzeitschrift ATZ. 2000, 36